# EUROPEAN PATENT APPLICATION

(11) **EP 1 486 471 A1**
(43) Date of publication of application: **15.12.2004**
(21) Application number: 02705231.5
(22) Date of filing: 15.03.2002
(51) Int. Cl.: C04B 28/14, C04B 14/38, B28B 3/02

(54) **COMPOSITE PLATE OF PLASTER AND INORGANIC FIBER, AND METHOD OF PRODUCING THE SAME**

(71) Applicant: Chiyoda UTE Co., Ltd., Yokkaichi, Mie 510-8570 (JP)
(72) Inventor: TAKAHARA, Akira, c/o CHIYODA UTE CO., LTD., Yokkaichi-shi, Mie 510-8570 (JP); ITO, Fumikazu, c/o CHIYODA UTE CO., LTD., Yokkaichi-shi, Mie 510-8570 (JP); FUJITA, Takumi, c/o CHIYODA UTE CO., LTD., Yokkaichi-shi, Mie 510-8570 (JP); HONDA, Hidetaka, c/o CHIYODA UTE CO., LTD., Yokkaichi-shi, Mie 510-8570 (JP)
(74) Representative: Müller-Boré & Partner Patentanwälte
(86) International application number: PCT/JP2002/002469
(87) International publication number: WO 2003/078350

(57) **Abstract**

An object is to provide a composite board of plaster and inorganic fiber excellent in fire resistance, provided with sound-absorbing property, which is absent from a plasterboard, and heat insulating property, light in weight, and high in dimensional stability to humidity change.

The composite board of plaster and inorganic fiber is provided, which is characterized in that the proportion of the inorganic fiber ranges from 20 to 70%by weight with respect to the total weight of the composite board. Since the composite board of the present invention contains inorganic fiber, it becomes a lightweight plasterboard and excellent in sound absorbing property. In addition, since the composite board of the present invention uses plaster, which is excellent in dimensional stability, as a binder, it is excellent in dimensional stability to humidity change compared to a rock wool decorative sound-absorbing board using a large amount of starch as a binder.

## Description

The present invention relates to a composite board of plaster and inorganic fiber to be used as a building material, and provides a composite board of plaster and inorganic fiber excellent in fire resistance, provided with a sound-absorbing property and a heat insulating property, light in weight andhigh in dimensional stability with regard to humidity, and a method of manufacturing the composite board.

Conventionally, as an interior material for a building, plasterboard has been widely used for the reasons of its excellent fire resistance and economic efficiency. However, the weight of plasterboard ranges from 10 to 11 kg per board (e.g., 910 mm x 1820 mm having a thickness of 9.5 mm), making it difficult for a worker to handle such plasterboard at a high place such as when the board is applied to the ceiling. Furthermore, in some cases where a worker transfers or applies plasterboard, he may drop it, thus producing cracks and scars. When plasterboard is applied to a wall, a heat-insulating property is required. When plasterboard is applied to a ceiling, a sound-absorbing property is required. However, the properties of plasterboard have been insufficient to satisfy the requirements of these cases. Accordingly, it has been desired to reduce the weight of plasterboard and impart a heat-insulating property and a sound-absorbing property to the plasterboard while maintaining the fire resistance of the plasterboard.

On the other hand, a rock wool decorative sound-absorbing board is frequently applied to the ceiling of a room requiring a sound-absorbing property. However, the rock wool decorative sound-absorbing board has a problem in that it varies in dimension depending upon the humidity changes within a room.

The present invention has been made under the aforementioned circumstances and is directed to provide a composite board of plaster and inorganic fiber excellent in fire resistance, provided with a sound-absorbing property which is absent from plasterboard, and a heat-insulating property, light in weight, and high in dimensional stability with regard to humidity changes.

As a result of intensive studies, the present inventors found that a predetermined composite board of plaster and inorganic fiber has excellent fire resistance, a sound-absorbing property which is absent from plasterboard, lightweight and high dimensional stability with regard to humidity changes.

More specifically, the present invention provides a composite board of plaster and inorganic fiber, characterized in that the proportion of the inorganic fiber ranges from 20 to 70% by weight with respect to the total weight of the composite board. The total weight of a composite board used herein is defined as the total weight of plaster dihydrate and inorganic fiber contained in the composite board.

The composite board of the present invention is a lightweight plasterboard since it contains inorganic fiber. This feature make it possible for a worker to work easily at a high place such as where the board is applied to a ceiling and to prevent a worker from dropping the board when he transfers or applies the board.

The composite board of the present invention is also excellent in sound-absorbing property since it contains inorganic fiber. In addition, the composite board uses plaster excellent in dimensional stability as a binder, so that the composite board is excellent in dimensional stability with regard to humidity changes as compared to a rock wool decorative sound-absorbing board using a large amount of starch as a binder.

Furthermore, the present invention provides a composite board of plaster and inorganic fiber as mentioned above, characterized in that inorganic fiber pieces are dispersed in a predetermined amount of water to make a slurry, calcined plaster is added to the slurry thus obtained and mixed with stirring, and the kneaded raw material is thereafter molded into a predetermined shape.

The present invention is also directed to a composite board of plaster and inorganic fiber as mentioned above, characterized in that the inorganic fiber is rock wool or glass wool.

The present invention is also directed to a composite board of plaster and inorganic fiber as mentioned above, characterized in that the calcined plaster is manufactured by calcining pulverized plaster dihydrate obtained by pulverizing plasterboard waste. Plasterboard waste is pulverized to obtain pulverized plaster dihydrate, which is further calcined and used as a raw material component, calcined plaster, for a composite board. In this manner, waste can be effectively recycled.

The present invention is also directed to a composite board of plaster and inorganic fiber as mentioned above, characterized by further containing a surfactant, which is added to the raw material when it is kneaded. When a surfactant is added, completely spherical air bubbles are produced due to a foaming action and separately introduced into slurry. The foams, since they act like ball bearings, improve the fluidity of the slurry. As a result, the feeding of slurry into a mold can be easily performed, improving manufacturing efficiency.

The present invention is also directed to a method of manufacturing a composite board of plaster and inorganic fiber by kneading a raw material containing calcined plaster and inorganic fiber, followed by molding the raw material into a predetermined shape, characterized in that inorganic fiber pieces are dispersed in a predetermined amount of water to make a slurry, calcined plaster is added to the slurry thus obtained, and mixed with stirring, thereby kneading the raw material.

The present invention is also directed to a method of manufacturing a composite board of plaster and inorganic fiber by kneading a raw material containing calcined plaster, inorganic fiber, and a surfactant followed by molding the raw material into a predetermined shape, characterized in that inorganic fiber pieces are dispersed in a predetermined amount of water to make a slurry, calcined plaster is added to the slurry thus obtained and mixed with stirring, thereby kneading the raw material, and further the slurry is fed to a mold, followed by pressing.

The present invention is also directed to a method of manufacturing a composite board of plaster and inorganic fiber as mentioned above, characterized in that the proportion of the inorganic fiber ranges from 20 to 70% by weight with respect to the total weight of the composite board.

The present invention is also directed to a method of manufacturing a composite board of plaster and inorganic fiber as mentioned above, characterized in that the inorganic fiber is rock wool or glass wool.

The present invention is also directed to a method of manufacturing a composite board of plaster and inorganic fiber as mentioned above, characterized in that the calcined plaster is manufactured by calcining pulverized plaster dihydrate obtained by pulverizing plasterboard waste.

Now, a composite board of plaster and inorganic fiber according to the present invention will be explained. Note that the total weight of a composite board used below is defined as the total weight of plaster dihydrate and inorganic fiber contained in the composite board.

A method of manufacturing a composite board of plaster and inorganic fiber of the present invention is directed to manufacturing a composite board of plaster and inorganic fiber by kneading a raw material containing calcined plaster and inorganic fiber, followed by molding the raw material into a predetermined shape, characterized in that inorganic fiber pieces are dispersed in a predetermined amount of water to make a slurry, calcined plaster is added to the slurry thus obtained, and mixed with stirring, thereby kneading the raw material.

According to this manufacturing method, it is possible to provide not only a conventional composite board of plaster and inorganic fiber whose inorganic fiber content is low but also a composite board of plaster and inorganic fiber whose inorganic fiber content is 20 to 70% by weight with respect to the total weight of the composite board.

This is because in a conventional method, inorganic fiber, calcined plaster, and water, are mixed at the same time, so that they cannot be mixed uniformly when the inorganic fiber is contained in an amount of no less than 20% by weight. Whereas, in the manufacturing method of the present invention, inorganic fiber pieces are dispersed in water containing no calcined plaster, with the result being that the viscosity does not increase so high and that they can be mixed more uniformly.

To explain more specifically, a composite board of plaster and inorganic fiber is manufactured as follows. First, inorganic fiber pieces are dispersed in a predetermined amount of water. More specifically, water is added to inorganic fiber in an amount of 60 to 800% by weight with respect to the weight of the inorganic fiber, and mixed with stirring by a known stirrer such as a propeller-, turbine-, or paddle-type stirrer, or a pulper.

Furthermore, during the step of mixing with stirring, pulp fiber or pulverized raw-material paper of plasterboard waste may be added as an additive.

The inorganic fiber to be used in the present invention may include, for example, rockwoolandglasswool. Theseinorganicfibers may be used singly or in a combination of two or more types. Rock wool used herein is not particularly limited as long as it is a known rock wool, which is, for example, formed by melting basic igneous rock such as basalt or andesite, or blast-furnace slag and blasting the molten matter by air, or air and water vapor to obtain a cotton-form material. Glass wool is also not particularly limited as long as the glass wool is obtained by melting glass and forming fiber from the molten glass by the use of blast or centrifugal force; however, a fiber diameter of the glass wool is preferably 4 to 8 µm.

It is possible to form a composite board without the addition of pulp fiber or pulverized raw-material paper for plasterboard waste. However, if it is contained, the dispensability of inorganic fiber pieces is improved and the plaster can be held by pulp fiber during a press step while dewatering described later, with the result that dewatering can be performed while suppressing the flow-out of plaster.

As for pulp fiber, known pulp fiber such as linter pulp, softwood pulp, and hardwood pulp may be used. As for the raw-material paper for plasterboard waste, one that is separated from plasterboard waste in the manner as described later is used. Pulp fiber or raw material paper for plasterboard waste is preferably added in an amount of 0.5 to 2.0% by weight with respect to the total weight of a composite board. If the amount exceeds 2.0% by weight, it is not preferable from a fire resistance point of view since pulp fiber or raw-material paper for plasterboard waste is an organic material. In contrast, if the amount is less than 0.5% by weight, it is not preferable since a large amount of plaster flows out together with water during a dewatering step with pressure.

Next, calcined plaster is added to slurry thus obtained and further mixed with stirring. If necessary, adispersant, accelerator, and retardant usually used in manufacturing plasterboard may be mixed. The rotation speed of a stirrer herein is preferably set at 360 rpm or more. This is because, if a mixture is stirred at a rotation speed of 360 rpm or more, a slurry of inorganic fiber and calcined plaster canbeobtainedwithgoodflowability. Furthermore, whenasurfactant is added as described later, air bubbles can be uniformly mixed. The calcined plaster to be added herein is prepared by heating a raw material, plaster dihydrate (CaSO₄·2H₂O), at a temperature of about 150 to 200°C to obtain calcined plaster (CaSO₄·1/2H₂O), and then pulverizing the calcined plaster. The raw-material plaster dehydrate that may be used includes natural plaster, chemical plaster, and waste plaster derived from plasterboard waste obtained by disassembly during a manufacturing process for a plasterboard. The waste plaster contains very fine plaster crystal particles as small as about 1 µm × 10 µm and thus has a large specific surface area. Therefore, to obtain a slurry having excellent flowability, a large amount of water is required. Since a large amount of water is used when plaster waste is used and the water must be dried during a manufacturing step, the conventional method has a problem of low productivity. The composite board of the present invention is free from such a problem with productivity since excessive water is removed before a drying step as described later.

Although calcined plaster is used in the present invention, in general, an inorganic binder other than calcined plaster, cement and anhydrous plaster may be considered. A composite board can be manufactured even if cement or anhydrous plaster are used; however, the hydration speed is low and a sufficient maturing time is required, with the result that productivity becomes extremely low. For this reason, use of cement or anhydrous plaster is not preferable.

Furthermore, during a step of mixing with stirring, various additives such as a surfactant, organic fiber (acrylic fiber, Vinylon fiber, etc.), inorganic fiber (glass fiber, carbon fiber, etc.), starch (corn starch, potato starch, flour starch, rice starch, tapioca starch, sago starch, chemically-modified starch, etc.), PVA(polyvinyl alcohol), methylcellulose, and inorganic lightweight aggregate (perlite, Shiras balloon, vermiculite, glassballoon, etc.) may be added.

The surfactant used herein is not particularly limited and a known surfactant such as an ionic surfactant and a nonionic surfactant may be used. Examples of a nonionic surfactant that can be used herein include ethylene oxide addition product of higher alcohol, polyoxyalkylene alkylether, sorbitan fatty acid ester, polyoxyethylene sorbitan fatty acid ester, polyoxyethylene sorbitol fatty acid ester, glycerin fatty acid ester, polyoxyethylene fatty acid ester, and polyoxyethylene glyceride.

Examples of an ionic surfactant that can be used herein include alkaline metal salts of an ethylene oxide addition product of higher alcohol, polyoxyethylene alkylether sulfate, sodium fatty acid, potassium fatty acid, alkyl sulfate, alkylbenzene sulfonate, alkylnaphthalene sulfonate, dialkyl sulfosuccinate, alkyldiphenylether disulfonate, polyoxyethylene alkylphosphate, polyoxyethylene alkylether acetate, alkane sulfonate, and salts of a naphthalene sulfonate and formalin condensation product. Of these surfactants, an ethylene oxide addition product of a higher alcohol, an alkaline metal salt of ethylene oxide addition product of a higher alcohol, or polyoxyethylene alkylether sulfate is particularly desirable since it has a high affinity for inorganic fiber and plaster.

A composite board can be manufactured even if a surfactant is not added. However, if a surfactant is added, completely spherical air bubbles may be separately introduced into the slurry by the foaming action of the surfactant. Since the air bubbles act like ball bearings, flowability is improved. As a result, the feeding of the slurry into a mold can be easily performed, improving manufacturing efficiency, as described later.

Furthermore, if a surfactant is added, water and other raw materials, such as inorganic fiber and plaster, are uniformly dispersed, significantly improving resistivity to material separation and improving the water-retaining property of the slurry. As a result, a uniform composite board can be obtained.

Even if acrylic fiber, Vinylon fiber, glass fiber, and carbon fiber are not added, a composite board can be manufactured; however, they are preferably added when the bending strength of a composite board is to be increased. The mixing proportion of such a fiber preferably ranges from 0.5 to 2.0% by weight with respect to the total weight of the composite board. When the mixing proportion exceeds 2.0% by weight, acrylic fiber, Vinylon fiber, glass fiber, and carbon fiber are not preferable from a fire resistance point of view. In contrast, when the mixing proportion is less than 0.5% by weight, the strength to be reinforced is low. On the other hand, if the mixing proportion of glass fiber exceeds 2.0% by weight, the viscosity of the slurry becomes high, so that materials are difficult to be uniformly mixed. In contrast, if the mixing proportion is less than 0.5% by weight, the strength to be reinforced is low.

A composite board can be manufactured even if starch (cornstarch, potatostarch, flour starch, rice starch, tapioca starch, sago starch, chemically-modified starch, etc.), PVA (polyvinyl alcohol), and methylcellulose are not added; however, they are preferably used to increase the adhesive strength between the inorganic fiber and plaster. In this case, starch (cornstarch, potato starch, flour starch, rice starch, tapioca starch, sago starch, chemically-modified starch, etc.), PVA (polyvinyl alcohol), and methylcellulose, may be used singly or in the form of a mixture. The mixing proportion is preferably from 0.5 to 2.0% by weight with respect to the total weight of a composite board. When the mixing proportion exceeds 2.0% by weight, starch (corn starch, potato starch, flour starch, rice starch, tapioca starch, sago starch, chemically-modified starch, etc.), PVA (polyvinyl alcohol), and methyl cellulose are not preferable froma fire resistance point of view, since they are organic materials. In contrast, when the mixing ration is less than 0.5% by weight, it is not preferable from a strength point of view since the inorganic fibers are likely to separate from the plaster.

As a chemically modified starch, dextrin and oxidized starch may be used. PVA is not particularly limited and PVA modified in various ways may be used. For example, various types of modified polyvinyl alcohols such as maleic acid modified and itaconic acid modified polyvinyl alcohols may be used.

The amount of inorganic fiber used herein is preferably from 20 to 70% by weight with respect to the total weight of a composite board. More specifically, a composite board is to contain plaster dihydrate (CaSO₄·2H₂O) and inorganic fiber. The inorganic fiber is preferably contained in an amount of 20 to 70% by weight with respect to the total weight of plaster dihydrate (CaSO₄·2H₂O) and inorganic fiber. Inorganic fiber contains much air between the fiber filaments, so that the weight of a composite board can be reduced by the presence of the air. However, if the amount of inorganic fiber is less than 20% by weight, the amount of air contained between the fiber filaments decreases, making it difficult to obtain a lightweight composite board.

It is a matter of course that, to decrease the weight of a composite board, the amount of air can be increased even if the amount of inorganic fiber contained in the composite board is less than 20% by weight. However, in this case, the amount of air that is not introduced between fiber filaments increases, and such air is localized above the slurry. As a result, it becomes difficult to manufacture a uniform composite board.

On the other hand, if the amount of inorganic fiber exceeds 70% by weight, the proportion of plaster decreases. As a result, the binding force between inorganic fiber filaments decreases, and the strength of a composite board significantly decreases. More preferably, the amount of inorganic fiber is 30 to 70% by weight. This is because a composite board having high strength and good sound-absorbing property can be obtained. Most preferably, the amount of inorganic fiber is from 40 to 60% by weight.

The slurry thus obtained is fed into a mold to obtain a predetermined shape. At this time, the moisture content of the slurry may be vaporized while the slurry is allowed to stay in the mold to form a composite board of inorganic fiber and plaster. On the other hand, in the case of slurry containing calcined plaster, inorganic fiber and a surfactant, it is desirable to press the slurry after the slurry is fed into a mold. It is more preferable that the slurry is dewatered by a vacuum extractor for the reasons mentioned below.

When no surfactant is added, water and other materials are present more or less separately. In this case, a filter cloth is placed on the bottom surface of a mold in advance and then the slurry is poured into the mold. Water passes easily through the filter cloth, whereas other materials remain on the filter cloth. In this manner, water can be easily separated, reducing drying time.

Conversely, in the case of a slurry containing a surfactant, it is difficult to remove excessive water from the slurry since the water retaining property has been improved. In other words, it is difficult to separate water by passing through the filter cloth by only pouring the slurry into a mold having a filter cloth previously placed on the bottom. Therefore, the slurry is compulsively pressed to squeeze out water from it, thereby accelerating dehydration.

In the pressing step, it is possible to manufacture composite boards having various densities if the volume of slurry is increased by the foaming action of a surfactant before the slurry is subjected to the pressing step and the ratio of the distance of the pressing is varied accordingly.

Furthermore, when a slurry containing a large amount of inorganic fiber is poured into a mold, the surface of the slurry becomes uneven due to the presence of the inorganic fiber. In this case, the surface of the slurry is smoothened by pressing the surface thereof.

As described above, since a composite board manufactured by a method of the present invention contains inorganic fiber filaments, which are discretely and uniformly dispersed in the plaster, the binding force between them is strong.

Note that, in the present invention, even if a known porous material such as a silica gel, siliceous shale, diatomaceous earth, and zeolite, a known formaldehyde absorbing material such as a hydrazide compound, and a known water repellent such as silicone and paraffin are added, the advantages of the present invention will not be influenced.

Figure 1 is a graph showing the sound-absorbing property of a composite board of plaster and inorganic fiber; and

Figure 2 is a graph showing the dimensional change rate of a composite board of plaster and inorganic fiber.

The effects of the present invention will now be described in detail by way of examples, which should not be construed as limiting the scope of the present invention.

### <Example 1>

In Example 1, as shown in Table 1, a composite board was prepared so as to contain rock wool in an amount of 20% by weight with respect to the total weight of plaster dihydrate and rock wool contained in the composite board.

In this Example, calcined plaster is present in the form of plaster dihydrate in a compositeboard. Fromthis, it is theoretically known that the weight of plaster increases by 18.6% by weight. Therefore, when a composite board was prepared, the amount of calcined plaster to be added was calculated by taking the increase thus estimated into consideration. The rock wool used herein was raw stock (manufactured by Taiheiyo Cement Corporation, an average density: 110 kg/m³, an average particle-containing rate: 1.0%, an average fiber diameter: 5.0 µm) defined by JIS A9504 (man-made mineral fiber heat insulating material).

A composite board was prepared, for example, as follows. As shown in Table 2, 73.5 g of rock wool and 3.75 g of pulp fiber were added to 441.0 g of water and dispersed by a pulper. After confirming that the rock wool was sufficiently dispersed, about 1000 ml of a foamed solution, which had been prepared by mixing 251. 3 g of calcined plaster, 3.75 g of oxidized starch, and 1.0 g of polyoxyethylene alkylether sulfate serving as a surfactant, with 200 g of water and foaming the mixture by a known foaming machine, was added. A portable mixer used as a stirrer at 360 rpm for one minute stirred the resultant mixture. Note that an average size of the foam of polyoxyethylene alkylether sulfate was about 50 µm and a foam density was 0.2 g/cm³. The slurry thus prepared was poured into a mold having a filter cloth placed on the lower surface. After the surface of the slurry was slightly smoothed, a flat plate added pressure to the slurry from above so as to obtain a slurry with a thickness of 12 mm while a suction extractor removed water from a lower portion. The pressure at this time was 6 kgf/cm². After the hydration-hardening of the plaster was completed, the molded product was taken out of the mold and allowed to dry at 200°C for 20 minutes to obtain a flat-plate composite board.

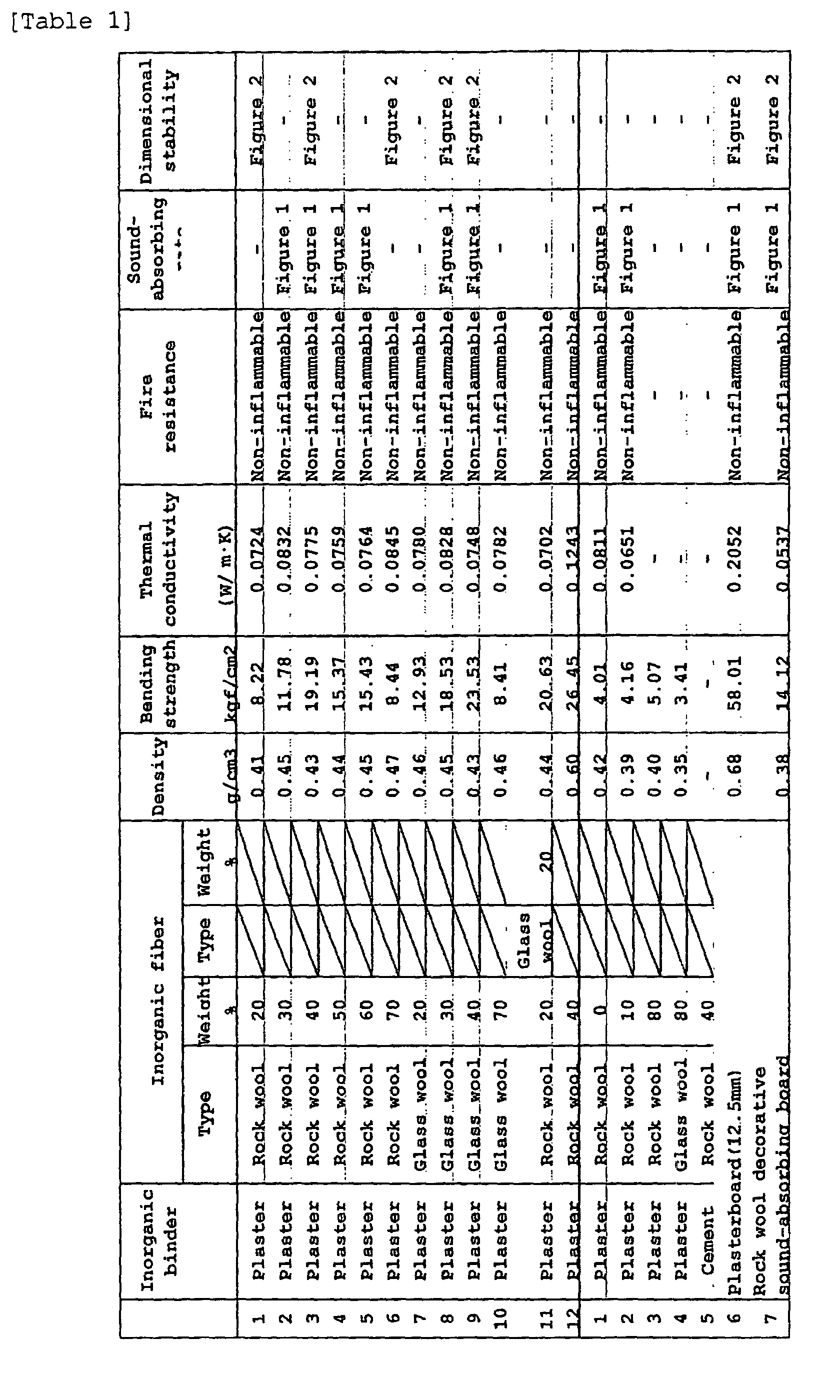

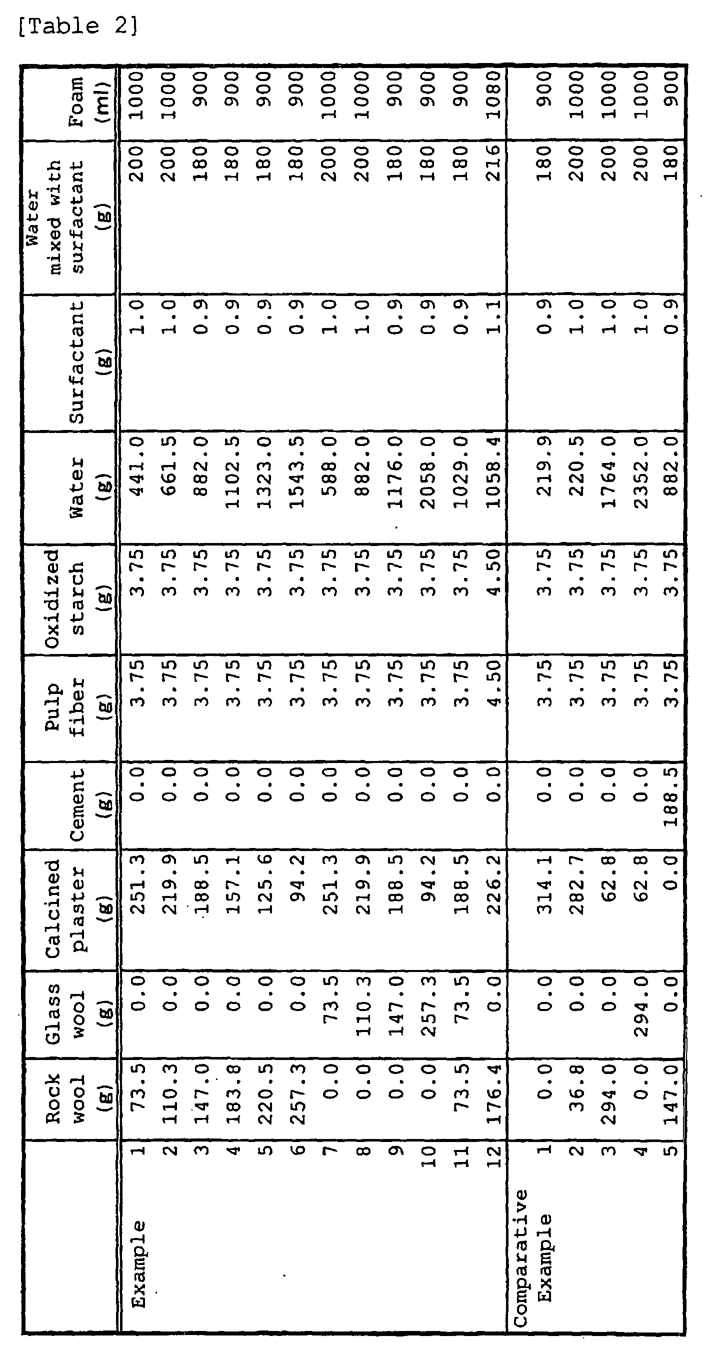

### <Examples 2 to 6>

In Examples 2 to 6, as shown in Tables 1 and 2, composite boards were respectively prepared so as to contain rock wool in amounts of 30%, 40%, 50%, 60%, and 70% by weight with respect to the total weight of plaster dihydrate and rock wool contained in a composite board.

Composite boards were prepared in the same manner as in Example 1 except for the amounts of rock wool, calcined plaster, water, polyoxyethylene alkylether sulfate, the amount of water to be added to polyoxyethylene alkylether sulfate, and the amount of foams produced.

### <Example 7>

In Example 7, a composite board was prepared so as to contain glass wool in an amount of 20% by weight with respect to the total weight of plaster dihydrate and glass wool contained in the composite board.

Calcined plaster is present in the form of plaster dihydrate. From this, it is theoretically known that the weight of plaster increases by 18.6% by weight. Therefore, when a composite board was prepared, the amount of calcined plaster to be added was calculated by taking the increase thus estimated into consideration. The glass wool used herein was New Super Blow (trade name) manufactured by Toyo Fiber Glass Kabushiki Kaisha.

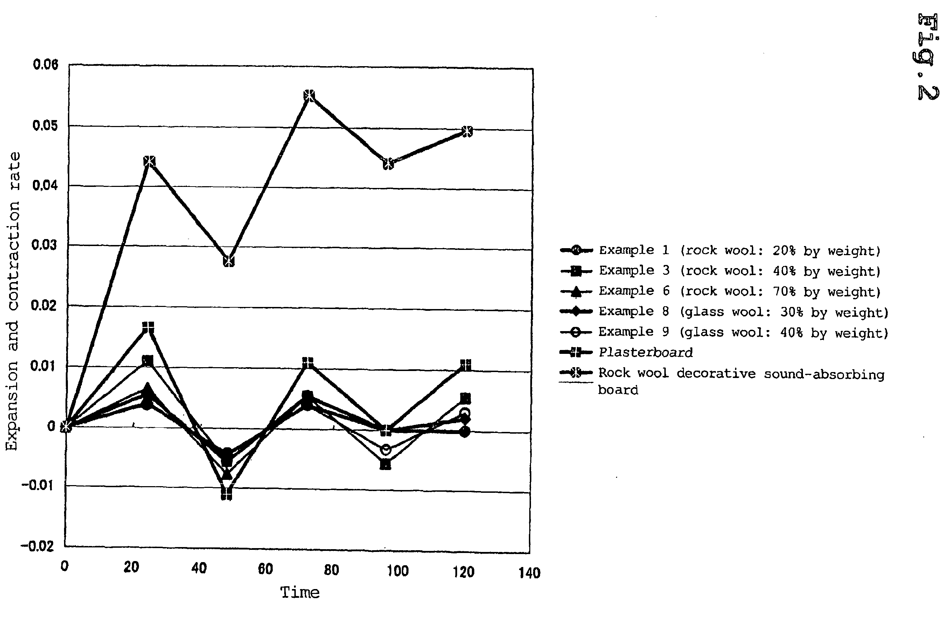

A composite board was prepared, for example, as follows. As shown in Figure 2, 73.5 g of glass wool and 3.75 g of pulp fiber were added to 588.0 g of water and dispersed by a pulper. After confirming that the rock wool was sufficiently dispersed, about 1000 ml of a foamed solution, which had been prepared by mixing 251.3 g of calcined plaster, 3.75 g of oxidized starch, and 1.0 g of polyoxyethylene alkylether sulfate, with 200 g of water and foaming the mixture by a known foaming machine, was added. A portable mixer used as a stirrer at 360 rpm for one minute stirred the resultant mixture. Note that an average size of the foam of polyoxyethylene alkylether sulfate was about 50 µm, and a foam density was 0.2 g/cm³. The slurry thus prepared was poured into a mold having a filter cloth placed on the lower surface. After the surface of the slurry was slightly smoothed, a flat plate added pressure to the slurry from above so as to obtain a slurry with a thickness of 12 mm while water was removed from a lower portion. The pressure at this time was 6 kgf/cm². After the hydration-hardening of the plaster was completed, the molded product was taken out of the mold and allowed to dry at 200°C for 20 minutes to obtain a flat-plate composite board.

### <Examples 8 to 10>

In Examples 8 to 10, as shown in Tables 1 and 2, composite boards were respectively prepared so as to contain glass wool in amounts of 30%, 40%, and 70% by weight with respect to the total weight of plaster dihydrate and rock wool contained in a composite board.

Composite boards were prepared in the same manner as in Example 7 except for the amounts of glass wool, calcined plaster, water, polyoxyethylene alkylether sulfate, the amount of water to be added to polyoxyethylene alkylether sulfate, and the amount of foams produced.

### <Example 11>

In Example 11, rock wool and glass wool were added to a composite board. A composite board was prepared so as to contain rock wool in an amount of 20% by weight with respect to the total weight of plaster dihydrate, rock wool, and glass wool contained in the composite board, and contain glass wool in an amount of 20% by weight with respect to the total weight of plaster dihydrate, rock wool, and glass wool contained in the composite board.

Calcined plaster is present in the form of plaster dihydrate. From this, it is theoretically known that the weight of plaster increases by 18.6% by weight. Therefore, when a composite board was prepared, the amount of calcined plaster to be added was calculated by taking the increase thus estimated into consideration. A composite board was prepared, for example, as follows.

As shown in Table 2, 73.5 g of rock wool, 73.5 g of glass wool, and 3.75 g of pulp fiber were added to 1029.0 g of water and dispersed by a pulper. After confirming that the rock wool was sufficiently dispersed, about 900 ml of a foamed solution, which had been prepared by mixing 188.5 g of calcined plaster, 3.75 g of oxidized starch, and 0. 9 g of polyoxyethylene alkylether sulfate, with 180 g of water and foaming the mixture by a known foaming machine, was added. A portable mixer used as a stirrer at 360 rpm for one minute stirred the resultant mixture. Note that an average size of the foam of polyoxyethylene alkylether sulfate was about 50 µm, and a foam density was 0.2 g/cm³. The slurry thus prepared was poured into a mold having a filter cloth placed on the lower surface. After the surface of the slurry was slightly smoothed, a flat plate added pressure to the slurry from above so as to obtain a slurry with a thickness of 12 mm while a suction extractor removed water from a lower portion. The pressure at this time was 6 kgf/cm². After the hydration-hardening of the plaster was completed, the molded product was taken out of the mold and allowed to dry at 200°C for 20 minutes to obtain a flat-plate composite board.

### <Example 12>

In Example 12, as shown in Table 2, a composite board was prepared so as to contain rock wool in an amount of 40% by weight with respect to the total weight of plaster dihydrate and rock wool contained in a composite board.

In Example 12, a composite board was prepared in the same manner as in Example 1 except for the amounts of rock wool, calcined plaster, pulp fiber, oxidized starch, water, polyoxyethylene alkylether sulfate, the amount of water to be added to polyoxyethylene alkylether sulfate, and the amount of foams produced. Note that, in Example 12, pressure was added to the slurry from above so as to obtain a slurry with a thickness of 12 mm while water was removed by a suction extractor from a lower portion. The pressure at this time was 12 kgf/cm².

### <Comparative Examples 1 to 5>

In Comparative Example 1, inorganic fiber was not contained. In Comparative Examples 2 to 3, composite boards were prepared so as to contain rock wool respectively in amounts of 10% and 80% by weight, compared to the total weight of plaster dihydrate and rock wool contained in the composite boards. In Comparative Example 4, a composite board was prepared so as to contain glass wool in an amount of 80% by weight, compared to the total weight of plaster dihydrate and glass wool contained in the composite board. In Comparative Example 5, a composite board was prepared by adding portland cement in place of calcined plaster as an inorganic binder.

In Comparative Examples 1 to 5, composite boards were prepared in the same manner as in Example 1 except for the amounts of rock wool, glass wool, calcined plaster, cement, pulp fiber, oxidized starch, water, polyoxyethylene alkylether sulfate, the amount of water to be added to polyoxyethylene alkylether sulfate, and the amount of foams produced.

Although the composite boards of Comparative Examples 3 and 4 were pressed so as to have a thickness of 12 mm, the thickness of the composite boards went back to 15 mm and 17 mm after taking out of molds, because of the spring-back of the inorganic fiber. Therefore, the composite boards were not prepared as designed. The composite board of Comparative Example 5 took a long time for curing cement, with the result that it took 7 hours or more to handle the board. Therefore, productivity was low. As described in the foregoing, Comparative Examples 3 to 5 had problems in manufacturing.

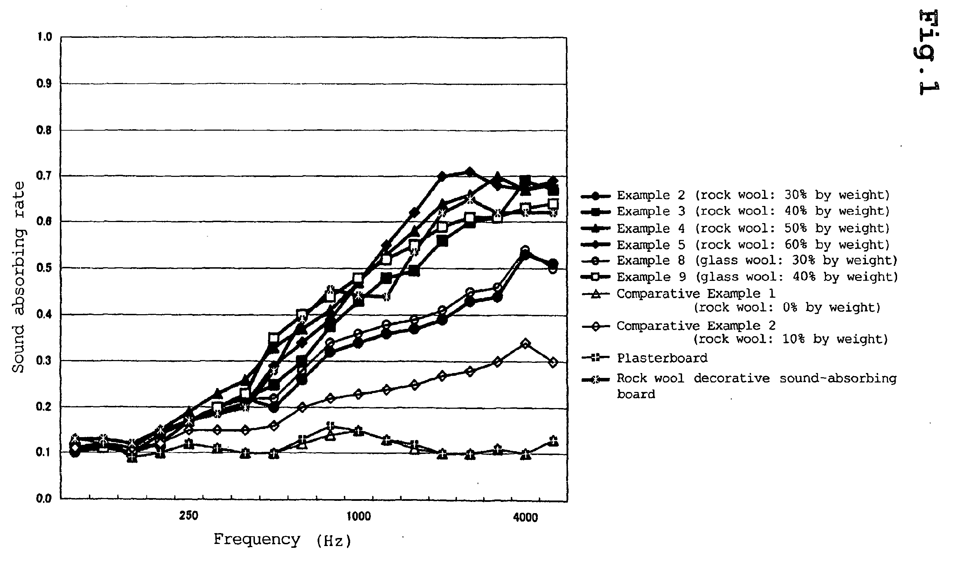

The composite boards thus prepared, commercially available plasterboard (Comparative Example 6), and commercially available rock wool decorative sound-absorbing board (Comparative Example 7) were measured for density, bending strength, fire resistance, thermal conductivity, sound-absorbing property and dimensional stability with regard to humidity. The measurement results are shown in Table 1 and Figures 1 and 2. Note that the commercially available plasterboard used in Comparative Example 6 had a thickness of 12.5 mm. The commercially available rock wool decorative sound-absorbing board used in Comparative Example 7 was a formed product of 12 mm thick containing rock wool as a main raw-material, binder, and admixture and having a decorated surface.

The density of composite boards of Examples 1 to 12 fell within the range of 0.41 to 0.60 g/cm³, which was lighter than the plasterboard of Comparative Example 6 having a density of 0.68 g/cm³.

Although the composite boards of Comparative Examples 3 and 4 were light since their respective densities were 0.40 g/cm³ and 0.35 g/cm³, they had a manufacturing problem in that the thickness of the boards went back due to the spring-back caused by inorganic fiber as mentioned above.

The bending strength was measured using a size-5 sample piece in accordance with a bending strength and impact test method for building boards (JIS A 1408). The composite boards of Examples 1 to 12 had a bending strength of 8.22 to 26.45 kgf/cm², which were 6.35 kgf/cm² or greater, calculated based on the reference value of a 12 mm thick rock wool decorative board specified in JIS A 6301, thus fully satisfying a strength so as to be suitable as a ceiling material. It was therefore confirmed that the composite boards have no problems in regard to strength as a ceiling material. In particular, the composite boards of Examples 3, 4, 5, 8, and 9, were superior in bending strength to the commercially available rock wool decorative sound-absorbing board (Comparative Example 7). On the other hand, the composite boards of Comparative Examples 1 to 4 had extremely low strength, more specifically, they exhibited a bending strength equal to or less than 6.35 kgf/cm², which was calculated based on the reference value of a 12 mm thick rock wool decorative sound-absorbing board. Hence, it was found that they had a problem regarding strength.

Fire resistance was tested in accordance with the test specified in Official Notice No. 1828 from the Ministry of Construction in 1970. Composite boards of Examples 1 to 12 all exhibited a non-flammable property. They were excellent in fire resistance even though they were lighter than commercially available plasterboards (Comparative Example 6).

The sound-absorbing property was compared based on a determination of sound-absorbing rate by an acoustic impedance tube specified in JIS A 1405 and in accordance with measurement of impedance (standing wave proportion analysis). Samples measured herein were composite boards of Examples 2, 3, 4, 5, 8, 9, Comparative Examples 1, 2, commercially available plasterboard (Comparative Example 6), and rock wool decorative sound-absorbing board (Comparative Example 7). Composite boards of Examples 2, 3, 4, 5, 8, and 9, exhibited high sound-absorbing rates at a frequency of 200 Hz or more as compared to the commercially available plasterboard (Comparative Example 6) . It was therefore confirmed that they excel in a high frequency range.

The composite boards of Examples 3, 4, 5, and 9, exhibited the same sound-absorbing rate as the rock wool decorative sound-absorbing board (Comparative Example 7), which generally exhibits an excellent sound-absorbing property. Since the composite boards of Examples 3, 4, 5, and 9, contain glass wool only in amounts of about 40 to 60% by weight, they can be manufactured at a lower cost than the rock wool sound-absorbing board.

The composite board of Comparative Example 1 exhibited a sound-absorbing rate only the same as the commercially available plasterboard (Comparative Example 6). The composite board of Comparative Example 2 exhibited an extremely low sound-absorbing property.

Next, the rate of dimensional change (the proportion of length change) with a change of humidity was determined in accordance with a humidity resistance test method for interior boards for a building defined by JIS A 1437. Samples used herein were the composite boards of Examples 1, 3, 6, 8, and 9, commercially available plasterboard (Comparative Example 6), and commercially available rock wool decorative sound-absorbing board (Comparative Example 7). A test was performed as follows. First, a test sample was allowed to stand in a vessel with a constant temperature of 25°C and a constant relative humidity of 50% for 24 hours, and thereafter, transferred to a vessel with a constant temperature of 25°C and a constant relative humidity of 90% and allowed to stand there for 24 hours. This procedure was performed repeatedly and the rate of dimensional change was determined. The rate of dimensional change (the rate of length change) of a test piece was determined by the comparator method specified by JIS A 1129. Test results are shown in Figure 2. The composite boards of Examples 1, 3, 6, 8, and 9, exhibited smaller ratios of dimensional change with respect to humidity change than both of the commercially available plasterboard (Comparative Example 6) and the commercially available rock wool decorative sound-absorbing board (Comparative Example 7). From the results, it was confirmed that the humidity resistance of a composite board is improved by the presence of inorganic fiber of 20 to 70% by weight with respect to the total weight of the composite board.

Next, thermal conductivity was determined in accordance with a method for determining the thermal resistance and the thermal conductivity of a heat-insulating material and a heat flow meter method specified by JIS A 1412. Each of the composite boards of Examples 1 to 12 exhibited a lower thermal conductivity than the plasterboard (Comparative Example 6). It was confirmed that the composite boards excel in a heat-insulating property.

As described above, since a composite board of the present invention contains inorganic fiber, a lightweight plasterboard is obtained. By virtue of this, it becomes easy for a worker to handle the composite board such as at a high place where the composite board is applied to the ceiling. In addition, it is possible to prevent a worker from dropping the composite board when he transfers or applies the composite board. Furthermore, since the composite board contains inorganic fiber, the composite board is excellent in sound absorbing property. Since the composite board uses plaster having a good dimensional stability as a binder, the composite board is excellent in dimensional stability with regard to humidity change as compared to a rock wool decorative sound-absorbing board using a large amount of starch binder.

## Claims

1. A composite board of plaster and inorganic fiber, **characterized in that** the proportion of the inorganic fiber ranges from 20 to 70% by weight with respect to the total weight of the composite board.

2. The composite board of plaster and inorganic fiber according to claim 1, **characterized by** dispersing inorganic fiber pieces in a predetermined amount of water tomake a slurry, adding calcinedplaster to the slurry thus obtained and mixing with stirring, thereby kneading the raw material, then molding the raw material kneaded into a predetermined shape.

3. The composite board of plaster and inorganic fiber according to claim 1 or 2, **characterized in that** the inorganic fiber is rock wool or glass wool.

4. The composite board of plaster and inorganic fiber according to claim 2 or 3, **characterized in that** the calcined plaster is manufactured by calcining pulverized plaster dihydrate obtained by pulverizing plasterboard waste.

5. The composite board of plaster and inorganic fiber according to claims 1 to 4, further comprising a surfactant, which is added when the raw material is kneaded.

6. A method of manufacturing a composite board of plaster and inorganic fiber by kneading a rawmaterial containing calcined plaster and inorganic fiber and then molding the raw material into a predetermined shape, **characterized by** dispersing inorganic fiber pieces in a predetermined amount of water to make a slurry, and adding calcined plaster to the slurry thus obtained and mixing with stirring, thereby kneading the raw material.

7. A method of manufacturing a composite board of plaster and inorganic fiber by kneading a raw material containing calcined plaster inorganic fiber, and a surfactant and then molding the raw material into a predetermined shape, **characterized by** dispersing inorganic fiber pieces in a predetermined amount of water to make a slurry, adding calcined plaster to the slurry thus obtained and mixing with stirring, thereby kneading the raw material, and further feeding the slurry into a mold and then pressing.

8. The method of manufacturing a composite board of plaster and inorganic fiber according to claim 6 or 7, **characterized in that** the proportion of the inorganic fiber ranges from 20 to 70% by weight with respect to the total weight of the composite board.

9. The method of manufacturing a composite board of plaster and inorganic fiber according to claims 6 to 8, **characterized in that** the inorganic fiber is rock wool or glass wool.

10. The method of manufacturing a composite board of plaster and inorganic fiber according to claims 6 to 9, **characterized in that** the calcined plaster is manufactured by calcining pulverized plaster dihydrate obtained by pulverizing plasterboard waste.
